# EUROPEAN PATENT APPLICATION

(11) **EP 1 638 360 A1**
(43) Date of publication of application: **22.03.2006**
(21) Application number: 05020618.4
(22) Date of filing: 21.09.2005
(51) Int. Cl.: H04Q 7/38, H04L 12/28

(54) **Dual-mode phone using GPS power-saving assist for operating in cellular and WIFI networks**

(30) Priority: 21.09.2004 US 611602 P; 27.05.2005 US 139915
(71) Applicant: Samsung Electronics Co., Ltd., Yeongtong-gu Suwon-si, Gyeonggi-do (KR)
(72) Inventor: Herle, Sudhindra P., Plano Collin County, TX 75025 (US)
(74) Representative: Grünecker, Kinkeldey, Stockmair & Schwanhäusser Anwaltssozietät

(57) **Abstract**

A dual-mode mobile station for accessing a wide-area wireless network according to a first wireless protocol and a small-area wireless network according to a second wireless protocol. The dual-mode mobile station comprises a controller that switches the dual-mode mobile station between a first mode in which the dual-mode mobile station communicates with the wide-area wireless network and a second mode in which the dual-mode mobile station communicates with the small-area wireless network. The controller switches the dual-mode mobile station between the first and second modes depending on a distance between the dual-mode mobile station and an access point of the small-area wireless network. When the dual-mode transceiver enters the first mode, the controller turns off a transceiver that operates in the second mode in order to save power.

## Description

The present invention is directed generally to a dual-mode phone that uses a GPS unit to switch between cellular operation and WiFi operation and to switch off power to the WiFi transceiver.

Wireless service providers continually seek new ways to improve wireless service (e.g., cellular service) and to maximize the capabilities of the current wireless infrastructure. There is a growing movement to integrate the capabilities of conventional wide-area cellular networks (e.g., CDMA, GSM, TDMA) and small area wireless or WiFi networks (e.g., IEEE-802.11a/b/g) in order to provide "One-Phone" service to users. One-Phone service allows the user of a conventional mobile station (e.g., cell phone, wireless PC or PDA) to use voice-over-IP (VoIP) service over a wireless broadband connection when the user is at home, at the office, or in a wireless hotspot and use the wide-area cellular (i.e., macro-cellular) service when the user is away from home, the office, or the wireless hotspot. In the most common approach, the wireless connection for the VoIP-over-broadband service is provided by a WiFi (IEEE-802.11 a/b/g) connection.

This trend is driven primarily by two factors. The first factor is the dramatically lowered cost of providing VoIP telephony service over a wired infrastructure. The second factor is the demand to have a single phone identity without making a distinction between a home phone number and a cell phone number.

In order to provide a good user experience, One-Phone service must seamlessly migrate from a WiFi network to a cellular network, especially when the user is in an active call. The migration from the cellular network to the WiFi network is generally not an issue during an active call, since the user may continue to use the cellular connection even if the user is in range of the WiFi network (i.e., there is no reason to break the cellular connection).

However, the IEEE-802.11 standard was not intended for portable telephony applications. The power requirements of IEEE-802.11x devices are quite large. When an IEEE-802.11 interface is used on a mobile station to offer dual-mode service, the battery life of the mobile station is greatly reduced. This may lead the user of the mobile station (e.g., cell phone) to believe that mobile stations from that manufacturer are of poor quality. The best way to combat the WiFi-induced battery drain is to turn off completely the WiFi interface when it is not in use and to turn the WiFi interface on only when the user manually enters a command when the user is near home, the office or another hot spot.

Currently, there are no methods for reliably and automatically detecting when the WiFi interface should be turned on or turned off. Thus, manual control remains the only viable option. However, using manual control to enable and disable the WiFi mode defeats the purpose of achieving seamlessness between wide-area wireless (i.e., cellular) operation and small-area wireless (i.e., WiFi) operation.

Thus, there is a need for a mobile station that can switch seamlessly between macro-cellular networks and Wi-Fi networks without adversely affecting battery life. In particular, there is a need for a mobile station that can reliably and automatically detect the presence of a WiFi network without adversely affecting battery life. There also is a need for a cell phone that can reliably detect the loss of the WiFi network connection when moving away from a WiFi access point (AP).

Almost all current cell phones have a built-in GPS receiver in order to comply with the federal E911 requirements. The present invention provides a mechanism for enabling and disabling the WiFi transceiver of a mobile station using the built-in GPS receiver of the mobile station, a built-in database of WiFi hotspot locations, and a software-based controller. Thus, the present invention provides a dual-mode cell phone (or similar mobile station) with the ability to switch from, for example, an IEEE-802.11 a/b/g network to a CDMA cellular network without dropping an on-going voice-over-IP (VoIP) phone call. The GPS receiver consumes a relatively small amount of power. Thus, the present invention uses GPS information readily available in current mobile stations to reduce the power consumption of the IEEE-802.11 components of a dual-mode mobile station.

To address the above-discussed deficiencies of the prior art, it is the primary object of the present invention to provide a dual-mode mobile station capable of accessing a wide-area wireless network according to a first wireless protocol and a small-area wireless network according to a second wireless protocol.

This object is solved by the subject matter of the independent claims.

Preferred embodiments are defined in the dependent claims.

According to an advantageous embodiment of the present invention, the dual-mode mobile station comprises a controller capable of switching the dual-mode mobile station between a first mode in which the dual-mode mobile station communicates with the wide-area wireless network and a second mode in which the dual-mode mobile station communicates with the small-area wireless network, wherein the controller switches the dual-mode mobile station between the first and second modes depending on a distance between the dual-mode mobile station and an access point of the small-area wireless network.

According to one embodiment of the present invention, the dual-mode mobile station further comprises a location-determining apparatus capable of determining a location of the dual-mode mobile station.

According to another embodiment of the present invention, the location-determining apparatus comprises a GPS receiver.

According to still another embodiment of the present invention, the dual-mode mobile station further comprises a first transceiver capable of communicating with the wide-area wireless network.

According to yet another embodiment of the present invention, the dual-mode mobile station further comprises a second transceiver capable of communicating with the small-area wireless network.

According to a further embodiment of the present invention, the dual-mode mobile station further comprises a memory associated with the controller capable of storing a plurality of access point records, wherein each of the plurality of access point records comprises location information associated with an access point of the small-area wireless network.

According to a still further embodiment of the present invention, the controller is capable of comparing a current position of the dual-mode mobile station to the location information in the each of the plurality of access point records in order to determine a distance between the dual-mode mobile station and each of the plurality of access points of the small-area wireless network.

According to a yet further embodiment of the present invention, the controller switches the dual-mode mobile station from the first mode to the second mode when a first distance between the dual-mode mobile station and a first one of the plurality of access points of the small area wireless network is less than a predetermined threshold value.

In one embodiment of the present invention, the controller causes the second transceiver to search for a beacon signal associated with the first access point when the dual-mode mobile station switches to the second mode.

In another embodiment of the present invention, the controller switches the dual-mode mobile station from the second mode to the first mode when the first distance between the dual-mode mobile station and the first access point is greater than the predetermined threshold value.

In still another embodiment of the present invention, the controller disables the second transceiver when the dual-mode mobile station switches to the first mode to thereby reduce a power consumption of the second transceiver.

In yet another embodiment of the present invention, the dual-mode mobile station is capable of downloading the plurality of access point records from the wire-link wireless network.

In the following, definitions of certain words and phrases used throughout this p atent document are explained: the terms "include" and "comprise," as well as derivatives thereof, mean inclusion without limitation; the term "or," is inclusive, meaning and/or; the phrases "associated with" and "associated therewith," as well as derivatives thereof, ma y mean to include, be included within, interconnect with, contain, be contained within, co nnect to or with, couple to or with, be communicable with, cooperate with, interleave, juxt apose, be proximate to, be bound to or with, have, have a property of, or the like; and the term "controller" means any device, system or part thereof that controls at least one oper ation, such a device may be implemented in hardware, firmware or software, or some co mbination of at least two of the same. It should be noted that the functionality associated with any particular controller may be centralized or distributed, whether locally or remotel y. Definitions for certain words and phrases are provided throughout this patent docume nt, those of ordinary skill in the art should understand that in many, if not most instances, such definitions apply to prior, as well as future uses of such defined words and phrases.

For a more complete understanding of the present invention and its advantages, reference is now made to the following description taken in conjunction with the accompanying drawings, in which like reference numerals represent like parts:
FIGURE 1 illustrates a dual-mode mobile station that is capable of switching between an access point of a WiFi network and a base station of a cellular network according to the principles of the present invention;
FIGURE 2 illustrates the dual-mode mobile station in FIGURE 1 in greater detail according to an exemplary embodiment of the present invention; and
FIGURE 3 illustrates in greater detail the WiFi hot spot database in the dual-mode mobile station in FIGURE 2 according to an exemplary embodiment of the present invention.

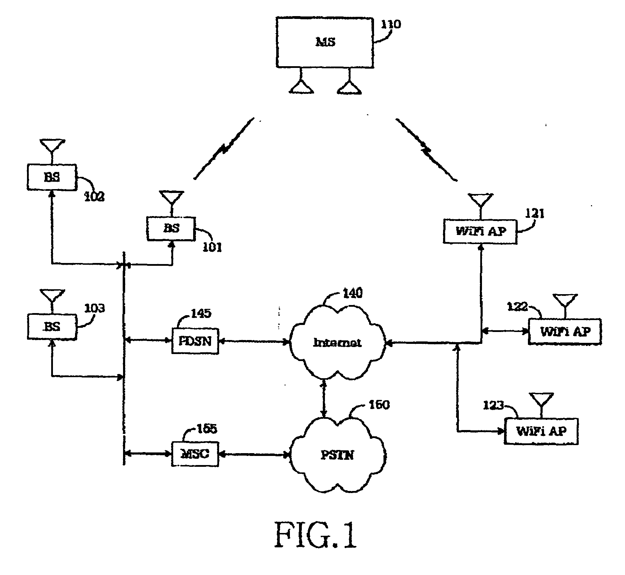

FIGURES 1 through 3, discussed herein, and the various embodiments used to describe the principles of the present invention in this patent document are by way of illustration only and should not be construed in any way to limit the scope of the invention. Those skilled in the art will understand that the principles of the present invention may be implemented in any suitably arranged wireless mobile station.
FIGURE 1 illustrates dual-mode mobile station 110, which is capable of switching between an access point of small-area (or local) wireless network and a base station of a cellular network or a similar wide-area wireless network according to the principles of the present invention. In the illustrated embodiment, mobile station 110 is capable of communicating with base stations 101-103 of a CDMA wireless network and with access points 121-123 of a WiFi (e.g., IEEE-802.11x) network. However, the choice of CDMA and WiFi is by way of example only and should not be construed to limit the scope of the present invention.

In an alternate embodiment of the present invention, base stations 101-103 may operate under a protocol other than CDMA, such as GSM, for example. In an alternate embodiment of the present invention, access points 121-123 may operate under a protocol other than IEEE-802.11x. More broadly speaking, the present invention is not limited to use in cellular phones, but may be implemented in any dual-mode mobile station. This may include, for example, a laptop computer equipped with a WiFi transceiver, a GPS receiver, and a cellular (e.g., GSM, CDMA) transceiver.

Base stations 101-103 are capable of communicating with an IP-based network, such as Internet 140, via packet data server node (PDSN) 145. Base stations 101-103 are also capable of communicating with public switched telephone network (PSTN) 150 via mobile switching center 155. Base stations 101-103 use MSC 155 and PSTN 150 to provide conventional voice connections and telephony services between MS 110 and another telephone device. Base stations 101-103 use PDSN 145 and Internet 140 to provide packet data services, including voice-over-IP (VoIP) services, between MS 110 and another Internet protocol (IP) node. Similarly, WiFi access points 121-123 use Internet 140 to provide packet data services, including voice-over-IP (VoIP) services, between MS 110 and another Internet protocol (IP) node.

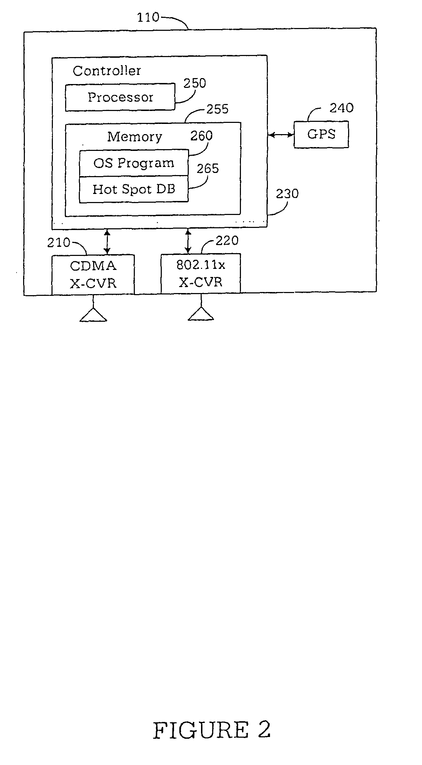

FIGURE 2 illustrates dual-mode mobile station 110 in greater detail according to an exemplary embodiment of the present invention. Mobile station (MS) 110 comprises CDMA transceiver (X-CVR) 210, *IEEE-802.11x transceiver (X-CVR) 220, global positioning system (GPS) receiver 240, and controller 230. According to the principles of the present invention, it is assumed that any mobile station, such as MS 110, that supports One-Phone service also possesses an embedded GPS receiver, such as GPS receiver 240.

Controller 230 further comprises processor 250 and memory 255. Memory 255 may comprise both static memory (e.g., Flash RAM or ROM) and dynamic memory (i.e., DRAM). Memory 255 stores operating system (OS) program 260 and hot spot database (DB) 265. As will be explained below in greater detail, hot spot database 265 contain geographical position information (i.e., GPS co-ordinates) of access points 121-123 and other WiFi access points.

For the purposes of simplicity and clarity in explaining the operation of the present invention, it shall be assumed that access point (AP) 121 is located in the home of the user of mobile station (MS) 110, that access point (AP) 122 is located in the office of the user of MS 110, and that access point (AP) 123 is located at some other place (i.e., coffee shop) frequented by the user of MS 110. It shall also be assumed that MS 110 is capable of communicating with base station (BS) 101 whenever MS 110 is in the vicinity of AP 121, AP 122 or AP 123.

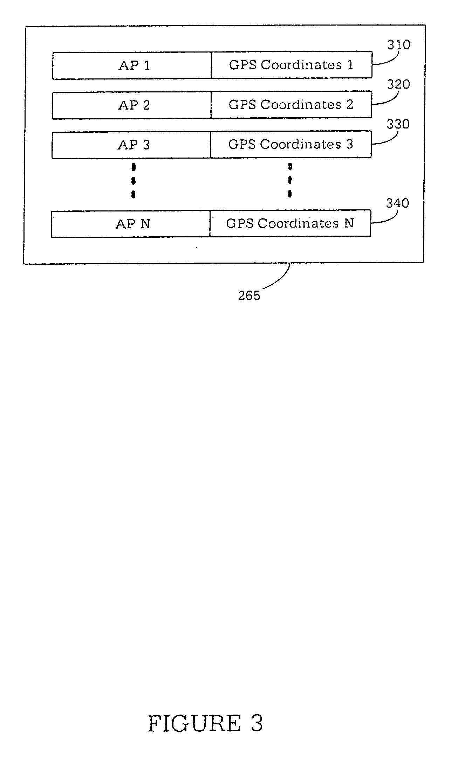

FIGURE 3 illustrates WiFi hot spot database 265 in dual-mode mobile station 110 in greater detail according to an exemplary embodiment of the present invention. Hot spot database 265 comprises N access point records, including exemplary access point (AP) records 310, 320, 330 and 340. AP record 310 comprises a first access point identifier field associated with a first access point (labeled AP 1) and a first location field, labeled GPS Coordinates 1, associated with AP 1. AP record 320 comprises a second access point identifier field associated with a second access point (labeled AP 2) and a second location field, labeled GPS Coordinates 2, associated with AP 2. AP record 330 comprises a third access point identifier field associated with a third access point (labeled AP 3) and a third location field, labeled GPS Coordinates 3, associated with AP 3. Finally, AP record 340 comprises an N^{th} access point identifier field associated with an N^{th} access point (labeled AP N) and an N^{th} location field, labeled GPS Coordinates N, associated with AP N. By way of example, AP 1 may be AP 121, AP 2 may be AP 122, and AP 3 may be AP 123.

Each one of the access point identifier fields, AP1 - APN, comprises information that may be used to identify and access a particular access point, such as an electronic serial number (ESN), a user name and password, encryption information, or a combination of these values. When MS 110 is in the vicinity of an access point stored in hot spot database 265, MS 110 uses the information in the access point identifier field to rapidly search for, and set up a connection to, that access point.

When MS 110 is activated for the first time in the residence of the user of MS 110, controller 230 receives from GPS receiver 240 the GPS location information of AP 121. Controller 230 then stores this information in hot spot database 265. Optionally, controller 230 may display information to the user of MS 110 and receive manual input commands from the user in order to select AP 121 as a known access point that will be associated with MS 110. The binding of mobile station 110 to the GPS co-ordinates of AP 121 can be done in a variety of ways. It may be done manually when the user uses the WiFi service at home for the very first time. It also may be done via an SMS message sent from AP 121 over the broadband wire link and Internet 140 to MSC 155, which is associated with base station 101. In a similar manner, MS 110 receives and stores information for AP 122 the first time MS 110 is operated when the user of MS 110 is at work.

According to the principles of the present invention, when mobile station 110 moves into the vicinity of AP 121, controller 230 activates the WiFi interface by applying power to IEEE-802.11x transceiver 220, which then scans for an IEEE-802.11 beacon from AP 121. Controller 230 determines whether MS 110 is in the vicinity of an access point by periodically comparing the current GPS co-ordinates of MS 110 to the stored GPS coordinates of all of the access points stored in hot spot database 265, including the stored GPS co-ordinates of AP 121, AP 122, and AP 123. If the GPS co-ordinates of MS 110 is less than a predetermined threshold value away from the GPS coordinates of an access point, then MS 110 is in the vicinity of that access point.

If MS 110 is currently in an active call over the cellular network via BS 101, the call is not disturbed. As soon as controller 230 detects that MS 110 is near, for example, AP 121, controller 230 performs the necessary IEEE-802.11x set-up (or access) procedures and subsequently registers MS 110 over the WiFi link and the broadband line with the cellular network. All subsequent calls are then placed via the WiFi network, rather than via BS 101.

Similarly, when MS 110 is active in the WiFi environment (via AP 121, for example) and begins moving out of the WiFi environment (i.e., away from AP 121), controller 230 detects that MS 110 is moving out of the range of WiFi AP 121. The detection is performed once again by comparing the current GPS co-ordinates of MS 110 to the GPS co-ordinates of AP 121 stored in hot spot database 265. This out-of-range detection procedure may be augmented by other heuristics, such as decreased receive (RX) signal power, increased frame error rate, or the like.

Subsequently, controller 230 places an identical call over the macro-cellular environment via CDMA transceiver 210 and instructs MSC 155 of the cellular network to switch the call from the VoIP service provided by AP 121 to the cellular voice or data service used by BS 101. The switching of the call may be handled in a number of ways, including in the same manner as adding another participant to a conference call. As soon as the cellular connection is successfully established, the WiFi interface is terminated and IEEE-802.11x transceiver 220 is powered off.

Controller 230 may employ additional heuristics to avoid ping-pong situations in which IEEE-802.11x transceiver 220 is turned off and on frequently (e.g., when a user goes to his backyard and then comes back indoors). By utilizing the GPS information coupled with pre-programmed information in OS program 260, mobile station 110 may turn IEEE-802.11x transceiver 220 on and off in an optimal manner.

Optionally, the cellular network operator that operates base stations 101-103 may distribute to MS 110 and other mobile stations a database of GPS co-ordinates of well-known hot spots (e.g., coffee shops) supported by the cellular network. A mobile stations with One-Phone service may look up hot spot database 265 in order to determine whether or not to use IEEE-802.11 transceiver 220. Hot spot database 265 may be updated via emerging IP-based over-the-air (OTA) provisioning and updating techniques (e.g., CDG IOTA-PA, OMA/WAP provisioning, and the like). Thus, the embedded database serves as a PRL for VolP calls.

Advantageously, the present invention reduces the power consumption of handsets while hunting for IEEE-802.11 networks. By disabling IEEE-802.11 transceiver 220 when MS 110 is not near a known hot spot, the present invention greatly reduce the power consumption caused by IEEE-802.11 transceiver 220. GPS receiver 240 is already present in many new mobile stations and has a much lower power draw than IEEE-802.11 transceiver 220.

Although the present invention has been described with an exemplary embodiment, various changes and modifications may be suggested to one skilled in the art. It is intended that the present invention encompass such changes and modifications as fall within the scope of the appended claims.

## Claims

1. A dual-mode mobile station capable of accessing a wide-area wireless network according to a first wireless protocol and a small-area wireless network according to a second wireless protocol, said dual-mode mobile station comprising:
a controller capable of switching said dual-mode mobile station between a first mode in which said dual-mode mobile station communicates with said wide-area wireless network and a second mode in which said dual-mode mobile station communicates with said small-area wireless network, wherein said controller switches said dual-mode mobile station between said first and second modes depending on a distance between said dual-mode mobile station and an access point of said small-area wireless network.

2. The dual-mode mobile station as set forth in claim 1, further comprising a location-determining apparatus capable of determining a location of said dual-mode mobile station.

3. The dual-mode mobile station as set forth in claim 2, wherein said location-determining apparatus comprises a GPS receiver.

4. The dual-mode mobile station as set forth in one of claims 1 to 3, further comprising a first transceiver capable of communicating with said wide-area wireless network.

5. The dual-mode mobile station as set forth in claim 4, further comprising a second transceiver capable of communicating with said small-area wireless network.

6. The dual-mode mobile station as set forth in one of claims 1 to 5, further comprising a memory associated with said controller capable of storing a plurality of access point records, wherein each of said plurality of access point records comprises location information associated with an access point of said small-area wireless network.

7. The dual-mode mobile station as set forth in claim 6, wherein said controller is capable of comparing a current position of said dual-mode mobile station to said location information in said each of said plurality of access point records in order to determine distances between said dual-mode mobile station and each of said plurality of access points of said small-area wireless network.

8. The dual-mode mobile station as set forth in one of claims 1 to 7, wherein said controller switches said dual-mode mobile station from said first mode to said second mode when a first distance between said dual-mode mobile station and a first one of said plurality of access points of said small area wireless network is less than a predetermined threshold value.

9. The dual-mode mobile station as set forth in claim 8, wherein said controller causes said second transceiver to search for a beacon signal associated with said first access point when said dual-mode mobile station switches to said second mode.

10. The dual-mode mobile station as set forth in one of claims 1 to 7, wherein said controller switches said dual-mode mobile station from said second mode to said first mode when said first distance between said dual-mode mobile station and said first access point is greater than said predetermined threshold value.

11. The dual-mode mobile station as set forth in claim 10, wherein said controller disables said second transceiver when said dual-mode mobile station switches to said first mode to thereby reduce a power consumption of said second transceiver.

12. The dual-mode mobile station as set forth in claim 6 or 7, wherein said dual-mode mobile station is capable of downloading said plurality of access point records from said wire-link wireless network.

13. The dual-mode mobile station as set forth in claim 5, wherein said first wireless protocol comprises a cellular telecommunication protocol.

14. The dual-mode mobile station as set forth in one of claims 1 to 12, wherein said cellular telecommunication protocol comprises one of CDMA protocol and GSM protocol.

15. The dual-mode mobile station as set forth in one of claims 1 to 14, wherein said second wireless protocol comprises a WiFi protocol.

16. The dual-mode mobile station as set forth in one of claims 1 to 14, wherein said second wireless protocol comprises an IEEE-802.11x wireless protocol.

17. A method of operating a dual-mode mobile station capable of accessing a wide-area wireless network according to a first wireless protocol and a small-area wireless network according to a second wireless protocol, the method comprising the steps of:
determining a current location of the dual-mode mobile station;
comparing the current location to location information associated with a plurality of access points associated with the small-area wireless network;
determining a distance between the dual-mode mobile station and each of the plurality of access points; and
operating the dual-mode mobile station in a first mode in which the dual-mode mobile station communicates with the wide-area wireless network if each of the distances between the dual-mode mobile station and each of the plurality of access points is greater than a predetermined threshold value.

18. The method as set forth in claim 17, further comprising the step of disabling a transceiver that communicates with the small-area wireless network when the dual-mode mobile station operates in the first mode to thereby reduce a power consumption of the transceiver.

19. The method as set forth in claim 17 or 18, further comprising the step of operating the dual-mode mobile station in a second mode in which the dual-mode mobile station communicates with the small-area wireless network if a first distances between the dual-mode mobile station and a first one of the plurality of access points is less than the predetermined threshold value.

20. The method as set forth in claim 19, further comprising the step of searching for a beacon signal associated with the first access point when the dual-mode mobile station operates in the second mode.
